# EUROPÄISCHE PATENTSCHRIFT

(11) **EP 2 053 011 B1**
(45) Veröffentlichungstag und Bekanntmachung des Hinweises auf die Patenterteilung: **07.05.2014**
(21) Anmeldenummer: 08167514.2
(22) Anmeldetag: 24.10.2008
(51) Int. Cl.: B66F 7/28, B66F 17/00, G01G 19/02, G01G 23/37

(54) **Auflageelement mit Gewichtssensor für Hebebühnen**
Supporting element with weight sensor for raised platforms
Elément d'appui doté d'un capteur de poids pour ponts élévateurs

(30) Priorität: 25.10.2007 DE 102007051389
(43) Veröffentlichungstag der Anmeldung: 29.04.2009
(73) Patentinhaber: Herrmann AG, 93483 Pösing (DE)
(72) Erfinder: Johannes, Herrmann, 93413, Cham (DE)
(74) Vertreter: Bittner, Bernhard

(56) Entgegenhaltungen:
- EP-A1- 0 631 976
- EP-A1- 1 876 136
- DE-A1- 2 937 582
- US-A- 4 036 317
- US-A1- 2004 026 135

## Beschreibung

Die vorliegende Erfindung bezieht sich auf eine Gewichtsmesseinrichtung für Hebebühnen für Kraftfahrzeuge. Derartige Hebebühnen sind aus dem Stand der Technik seit langem bekannt. Die Erfindung wird unter Bezugnahme auf eine Kfz-Hebebühne und insbesondere eine Zwei-Säulen-Hebebühne beschrieben, wobei an jeder Säule eine in vertikaler Richtung anheb- und absenkbare Hubeinrichtung angeordnet ist. Diese Hubeinrichtung weist horizontal schwenkbare Tragarme zur Aufnahme der Fahrzeuge auf. Die Erfindung ist jedoch auch bei solchen Hebebühnen anwendbar, die lang gestreckte Tragelemente zur Aufnahme der Fahrzeuge aufweisen.

Bei derartigen Hebebühnen ist stets darauf zu achten, dass die einzelnen Auflagepunkte zwischen den Tragarmen bzw. deren Auflageflächen und den anzuhebenden Bereichen des Fahrzeugs genau ausgewählt sind und sich im Laufe des Hebevorgangs die Kräfteverhältnisse nicht verändern. Insbesondere ist dabei zu beachten, dass die Aufnahmeelemente der Hebebühne an den korrekten Auflagestellen des zu hebenden Objekts bzw. Fahrzeugs angeordnet werden. Wird eine Auflagefläche unsachgemäß angebracht, kann es im Verlauf des Hubvorgangs zu einer vollständigen Entlastung des entsprechenden Aufnahmeelements und sogar zu einem Kippen bzw. Herabfallen des Fahrzeugs kommen.

Eine Hebebühne gemäss dem Oberbegriff des Anspruchs 1 ist aus der EP 0 631 976 bekannt.

Aus der DE 29 37 582 A1 ist eine Hebebühne, insbesondere eine Zwei-Säulen-Hebebühne für Kraftfahrzeuge bekannt. Diese Hebebühne weist an den Tragelementen Kraftmesseinrichtungen auf, deren Ausgangsignale an eine nachgeschaltete Sicherheitsschaltung weitergeleitet werden. Durch diese von den Kraftmesseinrichtungen ausgegebenen Signale kann eine eventuelle Schieflage des Fahrzeugs erkannt werden. Dabei ist die Kraftmesseinrichtung fest in das System der Hebebühne integriert bzw. die Tragarme der Hebebühne sind bereits auf diese Kraftmesseinrichtung abgestimmt. Das aus der DE 29 37 582 A1 bekannte System ist daher nicht auf bereits vorhandene Hebebühnen anwendbar.

Aus der bisher noch unveröffentlichten europäischen Patentanmeldung 061116565.0 ist ein Auflageelement für eine Hebebühne bekannt. Genauer wird dabei ein Auflageelement beschrieben, welches einen verformbaren Grundkörper und in dessen Innerem ein Sensorelement aufweist. Durch die Verformung dieses Grundkörpers wird dabei auf das Sensorelement eine Kraft ausgeübt und diese gibt wiederum ein dieser Kraft entsprechendes Signal aus. Es hat sich jedoch gezeigt, dass diese Verformung des Grundmaterials nichts stets geeignet ist, um die Kräfte in genau definierter Weise auf das Sensorelement zu übertragen. Die oben genannte Patentanmeldung wird durch Bezugnahme vollständig in die vorliegende Beschreibung einbezogen.

Der vorliegenden Erfindung liegt daher die Aufgabe zugrunde, die Sicherheit von Hebebühnen zu verbessern und dabei auch vorhandene bzw. ältere Modelle mit derartigen Sicherheitssystemen ausstatten zu können. Eine weitere erfindungsgemäße Aufgabe liegt darin, eine Hebebühne zu schaffen, die Korrekturmöglichkeiten im Falle eines auftretenden Ungleichgewichts erlaubt.

Dies wird erfindungsgemäß durch ein Auflageelement nach Anspruch 1 erreicht. Vorteilhafte Ausführungsformen und Weiterbildungen sind Gegenstand der Unteransprüche.

Ein erfindungsgemäßes Auflageelement für Hebebühnen, welches zwischen einem Tragelement der Hebebühne und einem zu hebenden Fahrzeug anordbar ist, wobei das Auflageelement von dem Trageelement entfernbar ist, weist eine Sensoreinrichtung zur Messung einer zwischen dem Fahrzeug und dem Trageelement wirkenden Gewichtskraft auf, wobei die Sensoreinrichtung ein Signal ausgibt, welches für diese Gewichtskraft charakteristisch ist. Weiterhin ist eine Sendeeinrichtung vorgesehen, die dieses charakteristische Signal oder ein aus diesem charakteristischen Signal abgeleitetes Signal ausgibt. Erfindungsgemäß weist das Auflageelement einen Grundkörper auf, in dessen Innerem die Sensoreinrichtung angeordnet ist. Weiterhin ist eine Auflagefläche vorgesehen auf der im Betriebszustand ein Element des zu hebenden Fahrzeugs aufliegt. Weiterhin ist eine innerhalb des Grundkörpers und oberhalb der Sensoreinrichtung angeordnete Kraftübertragungseinrichtung vorgesehen, welche wenigstens gegenüber einem Abschnitt des Grundkörpers beweglich ist und welche eine durch das Fahrzeug ausgeübte Gewichtskraft auf die Sensoreinrichtung überträgt.

Dabei kann diese Kraftübertragungseinrichtung direkt in das Material des Grundkörpers integriert sein, es wäre jedoch auch möglich, dass innerhalb des Grundkörpers Führungseinrichtungen vorgesehen sind, welche die Kraftübertragungseinrichtung gegenüber dem Grundkörper führen, wie beispielsweise eine Hülse, in der die Kraftübertragungseinrichtung angeordnet ist.

Bevorzugt besteht die Kraftübertragungseinrichtung aus einem anderen Material besteht, als der Grundkörper. Vorzugsweise besteht der Grundkörper aus einem verformbaren Material oder weist ein solches auf.

Das erfindungsgemäße Auflageelement kann nach Bedarf auf einer Hebebühne angebracht und auch jederzeit entfernt werden. Es wird bevorzugt nicht in die Hebebühne selbst integriert und kann damit auf alle Hebebühnen und auch auf ältere Modelle nachgerüstet werden. Ein derartiges Nachrüsten oder Bestücken ist auch sehr schnell möglich, sodass beispielsweise in einer Werkstatt erheblich weniger derartige Auflageelemente zur Verfügung stehen müssen als es der Anzahl der Hebebühnen entsprechen würde.

Vorzugsweise besteht die Kraftübertragungseinrichtung aus einem nicht oder nur wenig verformbaren Material, sodass die durch das Fahrzeug ausgeübte Kraft unmittelbar auf die Sensoreinrichtung übertragen wird. Auf diese Weise können Verfälschungen durch das verformbare Grundmaterial vermieden werden. Genauer gesagt wird die Kraft des Fahrzeuges unmittelbar über die Kraftübertragungseinrichtung auf die Sensoreinrichtung übertragen.

Vorzugsweise ist auch unterhalb der Sensoreinrichtung eine weitere Kraftübertragungseinrichtung vorgesehen, welche wenigstens gegenüber einem Abschnitt des Grundkörpers beweglich ist. Bevorzugt besteht auch diese weitere Kraftübertragungseinrichtung aus einem anderen Material als der Grundkörper. Auch hierbei handelt es sich vorzugsweise um ein nicht-verformbares Material. Auf diese Weise wird zwischen dem zu hebenden Fahrzeug und der Hebebühne ein durch nicht-verformbare Materialien und über die Sensoreinrichtung geleiteter durchgehender Kraftfluss erreicht, wobei in der Kraftausübungsrichtung kein oder nur wenig Material des Grundkörpers angeordnet ist.

Vorzugsweise ist das verformbare Material ein gummiartiges Material und insbesondere ein Hartgummimaterial. Dieses Material eignet sich besonders, um darin weitere Elemente des Auflageelements wie Elektronik, Energiespeichereinrichtungen und dergleichen zu integrieren. Dieses gummiartige Material kann insbesondere auch den hohen Kräften, die beim Heben der Fahrzeuge auftreten, standhalten. Es wäre jedoch auch möglich, als Material für den Grundkörper einen Hartschaum, wie beispielsweise einen Polyurethanschaum, zu verwenden.

Vorzugweise handelt es sich bei der Sensoreinrichtung um ein einen Dehnmessstreifen aufweisendes Element. Das Grundmaterial umgibt besonders bevorzugt die Sensoreinrichtung in Umfangsrichtung vollständig, sodass die Sensoreinrichtung in Umfangsrichtung möglichst gegen äußere Einflüsse geschützt ist.

Vorzugsweise bestehen die Kraftübertragungseinrichtungen aus Metall und besonders bevorzugt aus Stahl.

Bei einer weiteren vorteilhaften Ausführungsform ist der Grundkörper auf einer Trägerplatte angeordnet. Diese Trägerplatte besteht dabei besonders bevorzugt ebenfalls aus Metall. Die Trägerplatte kann Gewinde oder dergleichen aufweisen, um auf diese Weise an einem Tragelement einer Hebebühne angeschraubt zu werden. Weiterhin bewirkt auch diese Tragplatte eine effiziente Kraftübertragung auf die Sensoreinrichtung.

In einer weiteren vorteilhaften Ausführungsform weist das Auflageelement einen Anschluss für eine externe Stromquelle auf. Dabei ist es bevorzugt möglich, dass innerhalb des Auflageelements aufladbare Batterien angeordnet sind, die über eine externe Stromquelle aufgeladen werden können. Auf diese Weise ist ein örtlich unabhängiger Einsatz des Auflageelements möglich.

Bei einer weiteren vorteilhaften Ausführungsform ragt die Auflagefläche aus dem Grundkörper heraus. Auf diese Weise kann erreicht werden, dass das anzuhebende Fahrzeug nur auf denjenigen Bereichen des Auflageelements aufliegt, die wiederum direkt auf die Sensoreinrichtung wirken. Auf diese Weise wird eine Messung nicht durch andere Bereiche des Grundkörpers verfälscht.

Bei einer weiteren bevorzugten Ausführungsform ist die Auflagefläche kleiner ist als eine nach oben weisende Oberfläche des Auflagelements. Dabei kann die nach oben weisende Oberfläche des Auflageelements beliebige Forman annehmen, beispielsweise eine ebene oder eine gekrümmte Form. Durch die Verkleinerung der Auflagefläche gegenüber der nach oben weisenden Oberfläche des Auflagelements wird die Messgenauigkeit erhöht.

Vorzugsweise besteht die Auflagefläche aus dem gleichen Material, wie der Grundkörper. Dies bedeutet, dass bei dieser Ausführungsform ein in der Richtung der Krafterstreckung dünner Bereich der Auflagefläche vorgesehen ist und unter diesem wiederum die Kraftübertragungseinrichtung. Bevorzugt ist, abgesehen von der Auflagefläche in der vertikalen Richtung, d. h. der Kraftübertragungsrichtung, kein Grundkörpermaterial vorgesehen.

Bei einer weiteren vorteilhaften Ausführungsform weist die Sendeeinrichtung eine Signalgenerierungseinrichtung auf, welche ein Identifikationssignal generiert, mittels dessen das Auflageelement eindeutig identifizierbar ist. Auf diese Weise ist es möglich, eine Vielzahl von Auflageelementen einzusetzen, wobei diese Auflageelemente individualisierbar und voneinander unterscheidbar sind. Auch wäre es möglich, entsprechende Identifikationssignale einer Position des Auflageelementes, beispielsweise rechts vorne, zuzuordnen.

Die vorliegende Erfindung ist weiterhin auf eine Messanordnung mit einer Vielzahl von Auflageelementen der oben beschriebenen Art gerichtet. Weiterhin ist eine Arbeitseinheit vorgesehen, wobei die Arbeitseinheit eine Empfangseinrichtung für die von den Sendeeinrichtungen der Auflageelemente ausgegebenen Signal aufweist. Dabei kann es sich beispielsweise um einen Zentralcomputer handeln, der die Signale der Auflageelemente aufnimmt. Vorzugsweise kann diese Arbeitseinheit die ankommenden Signale anhand ihres Identifikationssignals jeweils unterscheiden und einem bestimmten Auflageelement zuordnen. Dabei ist es möglich, die Arbeitseinheit als von der Hebebühne getrennte bzw. unabhängige Einheit auszuführen. Damit kann dieses System auch bei bestehenden Hebebühnen nachgerüstet werden. Auch die Auflageelemente können, wie oben erwähnt, von der Hebebühne entfernt werden.

Besonders bevorzugt weist die Arbeitseinheit eine Speichereinrichtung auf, in der fahrzeugspezifische Kenndaten gespeichert sind, wie beispielsweise die Verhältnisse zwischen einer auf der Hinterachse lastenden Gewichtskraft und einer auf der Vorderachse lastenden Gewichtskraft.

Auf diese Weise ist es möglich, dass die Prozessoreinrichtung anhand der gemessenen Gewichtskräfte entscheidet, welche Auflageelemente dem vorderen Bereich des Fahrzeugs und welche Auflageelemente dem hinteren Bereich des Fahrzeugs zugeordnet sind. So ist es beispielsweise bei einer Reihe von Fahrzeugen denkbar, dass auf den vorderen Auflageelementen die doppelte Gewichtskraft lastet wie auf den hinteren Auflageelementen, da im vorderen Bereich des Fahrzeugs der Motor angeordnet ist. Bei anderen Fahrzeugen treten hierbei Gewichtskräfteverhältnisse von 2:3 auf. Unter Zugrundelegung dieser bekannten Verhältnisse können damit die Auflageelemente den Positionen des Fahrzeugs zugeordnet werden. Auf diese Weise können die von den einschlägigen CE-Vorschriften vergebenen Lastverteilungen überwacht werden.

Entsprechend können auch die Lastverteilungen zwischen den linken und den rechten Auflagepunkten eines Fahrzeugs berücksichtigt werden. Hierbei kann davon ausgegangen werden, dass die Lastverteilung zwischen der linken Seite eines Fahrzeugs und der rechten Seite eines Fahrzeugs 1:1 beträgt. Falls die von den Auflageelementen ausgegebenen Werte hiervon (unter Berücksichtigung einer Toleranz von ca. 5%) abweichen, kann ein Alarm ausgelöst oder die Hebebühne angehalten werden.

Weiterhin trifft die Prozessoreinrichtung bevorzugt unter Berücksichtigung des Gesamtgewichts des Fahrzeugs die Entscheidung, ob Gewichtsverhältnisse von 2:1 oder von 3:2 zugrundegelegt werden. Beispielsweise könnte bei einem Gesamtgewicht von bis zu 3 Tonnen, d. h. einem für Pkws üblichen Gewicht, ein Verhältnis von 3:2 zugrunde gelegt werden, und bei einem höheren Gewicht ein Verhältnis von 1:2. Daneben kann die Prozessoreinrichtung auch bestimmte Abweichungen von den oben genannten Sollverhältnissen zulassen, wie etwa Abweichungen zwischen +5% und -5% von dem Sollwert.

Es wäre jedoch auch möglich, dass die einzelnen Auflageelemente mit Beschriftungen versehen sind, die es dem Bedienungspersonal erlauben, sie richtig zuzuordnen, wie beispielsweise "vorne rechts", "hinten links" und dergleichen.

Vorzugsweise sind in der Prozessoreinrichtung auch die Identifikationssignale der einzelnen Auflageelemente abgespeichert, damit die Prozessoreinrichtung unterscheiden kann, ob ein bestimmtes Signal von einem zugeordneten Auflageelement oder beispielsweise von einem anderen Auflageelement (gegebenenfalls einer anderen Hebebühne) stammt. Vorzugsweise sind die Identifikationscodes, die in der Arbeitseinheit gespeichert sind, veränderbar. Auf diese Weise können beispielsweise beschädigte Auflageelemente durch neue Auflageelemente ausgetauscht und auf diese Weise der Betrieb vorgesetzt werden. Bevorzugt kann dabei die Prozessoreinrichtung zwischen einem Lernmodus und einem Arbeitsmodus umgeschaltet werden, wobei in dem Lernmodus neue Auflageelemente eingelesen werden können.

In einer weiteren vorteilhaften Ausführungsform weist die Arbeitseinheit auch ein Display bzw. eine Anzeigeeinrichtung auf. Auf diesem Display können beispielsweise die einzelnen gemessenen Gewichtskräfte ausgegeben werden. Auch kann eine Alarmeinrichtung vorgesehen sein, die bei Überschreiten oder Unterschreiten eines bestimmten Gewichtskraftwertes ein Alarmsignal ausgibt und beispielsweise einen Hebevorgang anhält. Weiterhin kann die Alarmeinrichtung auch bewirken, dass nur noch eine Abwärtsbewegung der Hebebühne möglich ist.

Daneben können über dieses Display auch genauere Informationen, beispielsweise über die genaue Gewichtsverteilung an unterschiedlichen Auflagepunkten ausgegeben werden.

Bevorzugt erfolgt die Messung der Gewichtskräfte in vorgegebenen Intervallen, beispielsweise im 5-Sekundentakt. Es wäre jedoch auch möglich, die Interwalle in Abhängigkeit von der jeweiligen Bewegung der Hebebühne zu steuern und im Stillstand ein längeres Intervall zu wählen als bei der Hebebewegung. Zu diesem Zweck könnten in den Auflageelementen zusätzlich Beschleunigungssensoren eingebaut sein, die eine Bewegung des jeweiligen Auflageelements feststellen und nur im Falle einer Bewegung ein Sendesignal ausgeben.

Die vorliegende Erfindung ist weiterhin auf eine Hebebühne mit wenigstens einem Antriebselement zur Durchführung eines Bewegungsvorgangs der Hebebühne und einer Vielzahl von Auflageelementen, welche zwischen Auflagepunkten eines Fahrzeugs und einem Tragelement der Hebebühne anordenbar sind, gerichtet, wobei diese Auflageelemente jeweils mindestens eine Sensoreinrichtung zur Messung von zwischen dem Fahrzeug und dem Trageelement wirkenden Gewichtskräften aufweisen, und die Sensoreinrichtungen Signale ausgeben, welche für diese Gewichtskraft charakteristisch sind.

Dabei weisen die Auflageelemente jeweils mindestens eine Sendeeinrichtung auf, die dieses charakteristische Signal oder ein aus diesem charakteristischen Signal abgeleitetes Signal ausgibt. Weiterhin ist eine Arbeitseinheit vorgesehen, wobei die Arbeitseinheit eine Empfangseinrichtung für die von den Sendeeinrichtungen der Auflageelemente drahtlos abgegebenen Signale aufweist.

Bei einer bevorzugten Ausführungsform steht die Arbeitseinheit mit dem Antriebselement der Hebebühne in Kommunikationsverbindung. Es wäre jedoch auch möglich, dass die Messanordnung auch vollständig unabhängig von der Hebebühne ausgeführt ist.

Erfindungsgemäß weist die Arbeitseinheit eine weitere Sendeeinrichtung auf, welche Signale drahtlos an die Auflageelemente ausgibt und die Auflageelemente weisen jeweils wenigstens eine weitere Empfangseinrichtung auf, welche die von der weiteren Sendeeinrichtung ausgegebenen Signale aufnimmt.

Auf diese Weise ist eine bidirektionale Verbindung zwischen den Auflageelementen und der Arbeitseinheit möglich. Vorzugsweise senden die Sendeeinrichtungen auch ein für einen Ladezustand von Batterien der Auflageelemente charakteristisches Signal.

Es wird darauf hingewiesen, dass eine entsprechende Messanordnung auf bestehende Hebebühnen nachrüstbar ist und die Messanordnung insofern auch unabhängig von der Hebebühne ausgeführt werden kann. Die Anmelderin behält sich vor, noch Ansprüche auf eine entsprechende Messanordnung zu richten.

Vorzugsweise weist die Arbeitseinheit eine Steuereinrichtung auf, die bewirkt, dass die weitere Sendeeinrichtung Bestätigungssignale in Reaktion auf die von den Sendeeinrichtungen der Auflageelemente gesendeten Signale ausgibt. Durch diese Vorgehensweise kann die Arbeitssicherheit der Hebebühne erhöht werden. Auch kann auf diese Weise die Lebensdauer der in den Auflageelementen vorgesehenen Batterien erhöht werden. Die Auflageelemente müssen auf diese Weise nicht permanent senden, sondern es genügt, die Signale in Intervallen zu senden. In Reaktion auf diese Signale übermittelt die Arbeitseinheit ein Bestätigungssignal für den ordnungsgemäßen Empfang der Messwerte. Vorzugsweise werden die Signale jeweils drahtlos übermittelt.

Vorzugsweise sind die Auflageelemente von der Hebebühne entfernbar, d.h. insbesondere entfernbar ohne Substanzbeeinträchtigung der Hebebühne selbst.

Die vorliegende Erfindung ist weiterhin auf ein Verfahren zum Betreiben einer Hebebühne gerichtet. Dabei werden in einem ersten Verfahrensschritt eine Vielzahl von zwischen einem zu hebenden Fahrzeug und einem Trageelement der Hebebühne wirkende Gewichtskräfte mittels einer Vielzahl von in Auflageelementen angeordneten Sensoreinrichtungen. In einem weiteren Verfahrensschritt werden für diese Gewichtskräfte charakteristische Werten durch eine Sendeeinrichtung der Auflageelemente an eine Empfangseinrichtung einer Arbeitseinheit übermittelt.

Erfindungsgemäß weist die Arbeitseinheit eine weitere Sendeeinrichtung auf, um Signale drahtlos an die Auflageelemente auszugeben und die Auflageelemente nehmen mit jeweils wenigstens einer weiteren Empfangseinrichtung, die von der weiteren Sendeeinrichtung ausgegebenen Signale auf.

Vorzugsweise handelt es sich bei den von den Auflageelementen ausgegebenen Signalen und Bestätigungssignale, die den korrekten Eingang der von den Sendeeinrichtungen der Auflageelemente abgegebenen Signale bestätigen.

### Weitere Vorteile und Ausführungsformen ergeben sich aus den beigefügten Figuren:

Darin zeigen:
- Fig. 1: eine schematische Darstellung eines erfindungsgemäßen Auflageelements; und
- Fig. 2: ein Blockdiagramm einer erfindungsgemäßen Messanordnung.

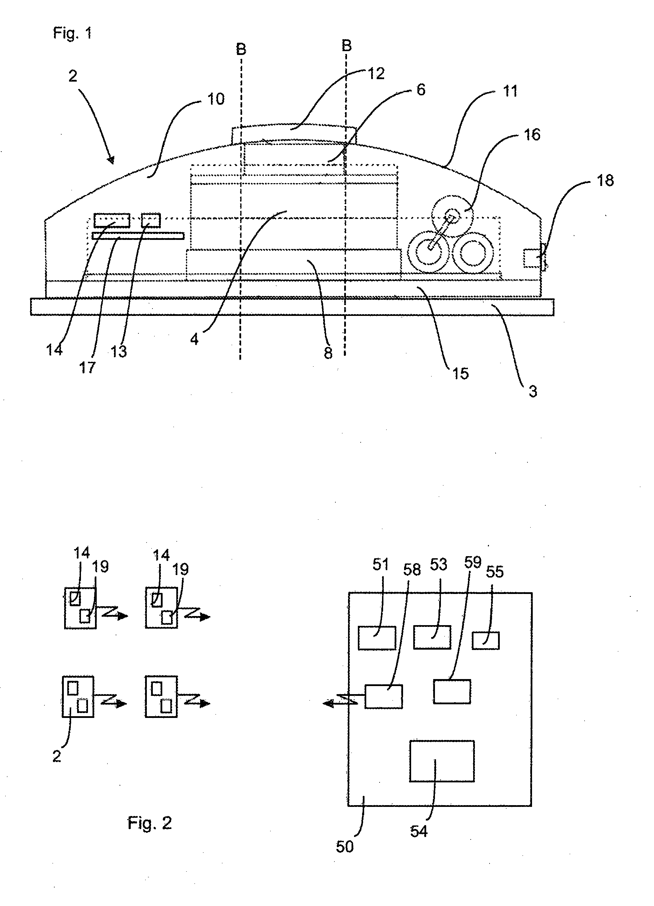

Das in Fig. 1 gezeigte Auflageelement 2 weist einen Grundkörper 10 auf, in dessen Innerem unter anderem eine Sensoreinrichtung 4 angeordnet ist. Dieser Grundkörper 10 besteht dabei aus Hartgummi oder einem ähnlichen verformbaren Material. In Umfangsrichtung, d. h. in einer zu der Figurenebene senkrechten Ebene, wird die Sensoreinrichtung 4 vollständig durch dieses Hartgummimaterial umgeben.

Der Grundkörper 10 weist eine gekrümmte Fläche 11 auf, an der eine ebenfalls aus dem Material des Grundkörpers bestehende Auflagefläche 12 angeordnet ist. Diese Auflagefläche 12 ragt gegenüber dem Grundkörper heraus, sodass ein Fahrzeug nur durch die Auflagefläche 12 gestützt wird. Unterhalb der Auflagefläche 12 ist eine Kraftübertragungseinrichtung 6 in Form beispielsweise einer Metallscheibe vorgesehen, welche die auf die Auflagefläche 12 übertragene Kraft direkt auf die Sensoreinrichtung 4 überträgt. Unterhalb der Sensoreinrichtung 4 ist eine zweite Kraftübertragungseinrichtung 8 in Form einer weiteren Scheibe aus Metall oder Stahl vorgesehen. Auf diese weitere Kraftübertragungseinrichtung 8, welche unterhalb der Sensoreinrichtung 4 angeordnet ist, folgt nach unten eine Grundplatte 15, die ebenfalls aus Metall hergestellt ist. Auf diese Weise ist in dem durch die gestrichelten vertikalen Linien angedeuteten Bereich B sowohl oberhalb als auch unterhalb der Sensoreinrichtung 4, abgesehen von der Auflagefläche, lediglich nicht-verformbares Material vorgesehen, sodass effizient die auf die Auflagefläche wirkende Kraft gemessen werden kann. Diese Grundplatte 15 ruht wiederum auf einem Trageelement 3 der Hebebühne.

Das Bezugszeichen 16 bezieht sich auf Energiespeichereinrichtungen, die hier in Form handelsüblicher NiMh-Akkus ausgeführt sind. Über eine Ladebuxe 18 können diese Akkus aufgeladen werden. Dabei sind die Akkus auch aus dem Auflageelement 2 entnehmbar und durch neue Akkus ersetzbar.

Weiterhin ist im Inneren des Grundkörpers 10 auch eine Elektronikplatine 13 angeordnet, welche die von der Sensoreinrichtung 4 ausgegebenen Messsignale auswertet, sowie eine Sendeeinrichtung 14, welche die den gemessenen Gewichtskräften entsprechenden Signale bevorzugt drahtlos ausgibt. Diese elektronischen Einheiten wie die Sendeeinrichtung 14 und eine Prozessoreinrichtung 17 sind bevorzugt in der Höhe der Sensoreinrichtung 4 angeordnet, d. h. besonders bevorzugt in einem mittleren Bereich des Auflageelements 2. In diesem Bereich bleiben diese elektronischen Komponenten auch geschützt, wenn beispielsweise ein Fahrzeug abrutscht und die Gewichtskraft auf den gekrümmten Bereich 11 des Auflageelements 2 wirkt. Dabei ist es möglich, dass die Elektronikeinheiten vergossene Elemente sind, die auf diese Weise auch wenig anfällig gegenüber Feuchtigkeit sind.

Fig. 2 zeigt ein Blockdiagramm einer erfindungsgemäßen Messanordnung für Hebebühnen. Diese Messanordnung weist vier Auflageelemente 2 der in Figuren 1 gezeigten Art auf. Jedes dieser Auflageelemente 2 gibt bei Belastung ein Signal aus, welches charakteristisch für eine gemessene Gewichtskraft ist. Diese Signale werden an eine Arbeitseinheit 50 abgegeben. Diese Arbeitseinheit 50 weist eine Empfangseinrichtung 51 zum Empfangen der von den Auflageelementen 2 abgegebenen Signale auf. Daneben ist eine Prozessoreinrichtung 53 vorgesehen, welche Signale empfängt und analysiert. Dabei kann die Prozessoreinrichtung nicht nur die gemessenen Gewichtskräfte ermitteln, sondern auch anhand von Identifikationssignalen ermitteln, von welchem Auflageelement welches Signal stammt.

Weiterhin ist es auch möglich, dass die Arbeitseinheit aus den von den einzelnen Auflageelementen übermittelten Gewichtswerten das Gesamtgewicht des Fahrzeugs bestimmt. Dabei kann aus einer maximal zulässigen Traglast für die Hebebühne auf die maximal zulässige Traglast für jeden Tragarm geschlossen und ein Alarm ausgegeben werden, wenn diese zulässige Traglast für einen oder mehrere Arme überschritten wird. Wenn beispielsweise die maximale Traglast für eine bestimmte Hebebühne bei 4000 kg. liegt, kann entsprechend die für jeden Tragarm zulässige Traglast auf 1000 kg festgelegt werden.

Daneben können in der Prozessoreinrichtung bzw. einer dieser zugeordneten Speichereinrichtung 55 auch Fahrzeugdaten gespeichert sein, die zur Zuordnung der einzelnen Auflageelemente zu bestimmten Punkten des Fahrzeugs dienen. So kann beispielsweise anhand der übermittelten Werte für die Gewichtskraft ermittelt werden, ob das betreffende Auflageelement unter einem vorderen Bereich des Fahrzeugs oder unter einem hinteren Bereich des Fahrzeugs angeordnet ist, da sich, wie oben erwähnt, in Abhängigkeit von den Fahrzeugen diese jeweiligen Gewichtskomponenten unterscheiden. Weiterhin kann die Prozessoreinrichtung auch die Lage der Auflageelemente bestimmen und dies bei der Steuerung der Hebebühne berücksichtigen.

Schließlich kann in der Arbeitseinheit 50 auch eine Alarmeinrichtung vorgesehen sein, die beispielsweise bei Feststellen einer zu geringen Gewichtskraft, die auf eines der Auflageelemente wirkt, oder einer ungleichmäßigen Gewichtsverteilung auf ein oder mehrere Auflageelemente einen Alarm auslöst und beispielsweise einen Hebevorgang einstellt.

Daneben weist die Arbeitseinheit 50 eine Anzeigeeinrichtung 54 auf, die an den Benutzer die jeweils gemessenen Gewichtskräfte ausgibt, bevorzugt mit einer Zuordnung zu dem jeweiligen Auflageelement oder dem Bereich des Fahrzeugs. Durch eine derartige Anzeige lässt sich ermitteln, ob die Auflagepunkte der Hebebühne korrekt an dem Fahrzeug angebracht sind. Damit ist, wie oben ausgeführt, die Arbeitseinheit mit der Steuerung der Hebebühne verbunden, um bei Auftreten von fehlerhaften Gewichtsverteilungen auf diese Einwirken zu können. Die Arbeitseinheit kann weiterhin eine (nicht gezeigte) Alarmausgabeeinrichtung aufweisen, die eine fehlerhafte Gewichtsverteilung und/oder Überlastung anzeigt.

Weiterhin kann die Anzeigeeinrichtung eine niedrige Batteriespannung der Auflageelemente anzeigen. Zu diesem Zweck enthalten die von den Sendeeinrichtungen ausgesendeten Signale auch charakteristische Werte für einen Ladezustand der jeweiligen Batterien.

Die Prozessoreinrichtung 53 ist damit auch in der Lage, Signale, die von den Auflageelementen 2 stammen, zu unterscheiden von Signalen, die von anderen Auflageelementen oder anderen Sendeeinrichtungen stammen. Falls einzelne Auflageelemente ausgetauscht werden können, ist es möglich, in der Arbeitseinheit die entsprechenden neuen Adressen der eingewechselten Auflageelemente zu speichern. Diese Neuspeicherung kann auch automatisch geschehen, in dem beispielsweise ein Lesemodus vorgesehen wird, der neue Auflageelemente bzw. deren Identifikationscodes einliest. Bevorzugt kann die Arbeitseinrichtung auch mit einem Computer verbunden werden.

Die Arbeitseinheit 50 dient damit auch zum Auswerten der Signale der einzelnen Sensoreinrichtungen, um auf diese Weise die Belastungen an den einzelnen Auflagebereichen zwischen den Auflageelementen und dem Fahrzeug zu bestimmen. Durch die Messung der Gewichtskräfte, die an den einzelnen Auflageelementen wirken, kann mit Hilfe der Auswertung festgestellt werden, ob die Last des Fahrzeugs korrekt verteilt und/oder überlastet ist, um ein sicheres Heben des Fahrzeugs zu ermöglichen.

Die Datenübertragung zwischen der Arbeitseinheit (20) und den Auflageelementen (2) wurde im Hinblick auf die beiden Erfordernisse entwickelt, dass einerseits eine sichere Übertragung der Daten zwischen den Auflageelementen (2) und der Arbeitseinheit (20) und andererseits ein niedriger Energieverbrauch der Auflageelemente (20) erreicht wird.

Zusätzlich zu den oben genannten Anforderungen, ist es hilfreich, permanente Funkverbindung zwischen den Auflageelementen (2) und der Arbeitseinheit (20) zu halten, so dass die (20) die Daten korrekt evaluieren kann und Kommunikationsausfälle erkennt. Die (20) warten in einem Ruhemodus und werden in vorgegebenen zeitlichen Intervallen (beispielsweise jede Sekunde) aktiviert um die Last zu messen und die Messwerte zu senden. Nach dem Senden des Datensatzes öffnet sich ein Empfangsfenster. Während dieser Zeit erwarten die Auflageelemente wählbare zusätzliche Befehle und Bestätigung, dass der Datensatz korrekt gesendet wurde. Nach einer festgelegten Periode (etwa 2 ms), schließt das Auflageelement 20 das Empfangsfenster. Wenn der Datensatz korrekt bestätigt wurde, geht das Auflageelement 20 wieder in den Ruhemodus und wartet auf einen neuen Messzyklus. Wenn der Datensatz nicht bestätigt wurde (entweder weil dieser oder die Bestätigung verloren ging), sendet das Auflageelement 20 den Datensatz noch einmal und öffnet zur Bestätigung ein neues Empfangsfenster. Dieser Prozess wiederholt sich 3 Mal. Wenn der Datensatz nach dem dritten Versuch nicht gesendet ist, wird er aus der Kommunikationsschlange herausgenommen und ein neuer Lastmesswert wird im nächsten Messzyklus übertragen.

### Bezugszeichenliste

- 2: Auflageelement
- 3: Trageelement
- 4: Sensoreinrichtung
- 6: Kraftübertragungseinrichtung
- 8: zweite Kraftübertragungseinrichtung
- 10: Grundkörper
- 11: gekrümmte Fläche
- 12: Auflagefläche
- 13: Elektronikplatine
- 14: Sendeeinrichtung
- 15: Grundplatte
- 16: Energiespeichereinrichtung
- 17: Prozessoreinrichtung
- 18: Ladebuxe
- 19: weitere Empfangseinrichtung
- 50: Arbeitseinheit
- 51: Empfangseinrichtung
- 53: Prozessoreinrichtung
- 54: Anzeigeeinrichtung
- 55: Speichereinrichtung
- 58: weitere Sendeeinrichtung
- 59: Steuereinrichtung
- B: Linie

## Patentansprüche

1. Auflageelement (2) für Hebebühnen, welches zwischen einem Trageelement (3) der Hebebühne und einem zu hebenden Fahrzeug anordenbar ist, wobei das Auflageelement (2) von dem Trageelement (3) entfernbar ist, mit einer Sensoreinrichtung (4) zur Messung einer zwischen dem Fahrzeug und dem Trageelement (3) wirkenden Gewichtskraft, wobei die Sensoreinrichtung (4) ein Signal ausgibt, welches für diese Gewichtskraft charakteristisch ist, mit einer Sendeeinrichtung (14), die dieses charakteristische Signal oder ein aus diesem charakteristischen Signal abgeleitetes Signal ausgibt,
**dadurch gekennzeichnet, dass**
das Auflageelement einen Grundkörper (10) aus einem verformbaren Material, in dessen Innerem die Sensoreinrichtung (4) angeordnet ist, eine Auflagefläche (12),
auf der im Betriebszustand ein Element des zu hebenden Fahrzeugs aufliegt, sowie eine innerhalb des Grundkörpers (10) und oberhalb der Sensoreinrichtung (4) angeordnete Kraftübertragungseinrichtung (6), welche wenigstens gegenüber einem Abschnitt des Grundkörpers (10) beweglich ist und welche eine durch das Fahrzeug ausgeübte Gewichtskraft auf die Sensoreinrichtung (4) überträgt, aufweist.

2. Auflageelement (2) nach Anspruch 1,
**dadurch gekennzeichnet, dass**
die Kraftübertragungseinrichtung (6) aus einem anderen Material besteht als der Grundkörper (10).

3. Auflageelement (2) nach wenigstens einem der vorangegangenen Ansprüche, **dadurch gekennzeichnet, dass**
die Sendeeinrichtung (14) das Signal drahtlos übermittelt bzw. abgibt.

4. Auflageelement (2) nach wenigstens einem der vorangegangenen Ansprüche, **dadurch gekennzeichnet, dass**
unterhalb der Sensoreinrichtung (4) eine weitere Kraftübertragungseinrichtung (8) angeordnet ist, welche wenigstens gegenüber einem Abschnitt des Grundkörpers (10) beweglich ist.

5. Auflageelement (2) nach wenigstens einem der vorangegangenen Ansprüche, **dadurch gekennzeichnet, dass**
der Grundkörper (10) die Sensoreinrichtung (4) in Umfangsrichtung vollständig umgibt.

6. Auflageelement (2) nach wenigstens einem der vorangegangenen Ansprüche, **dadurch gekennzeichnet, dass**
der Grundkörper (10) auf einer Trägerplafte (15) angeordnet ist,

7. Auflageelement (2) nach wenigstens einem der vorangegangenen Ansprüche, **dadurch gekennzeichnet, dass**
die Auflagefläche (12) aus dem Grundkörper (10) herausragt.

8. Auflageelement (2) nach wenigstens einem der vorangegangenen Ansprüche, **dadurch gekennzeichnet, dass**
die Auflagefläche (12) kleiner ist als eine nach oben weisende Oberfläche (11) des Auflagelements (2).

9. Auflageelement (2) nach wenigstens einem der vorangegangenen Ansprüche, **dadurch gekennzeichnet, dass**
die Sendeeinrichtung (14) eine Signalgenerierungseinrichtung aufweist, welche ein Identifikationssignal generiert, mittels dessen das Auflageelement eindeutig identifizierbar ist.

10. Messanordnung mit einer Vielzahl von Auflageelementen (2) nach wenigstens einem der vorangegangenen Ansprüche und einer Arbeitseinheit (20), wobei die Arbeitseinheit eine Empfangseinrichtung für die von den Sendeeinrichtungen der Auflageelemente abgegebenen Signale aufweist.

11. Hebebühne mit einer Messanordnung nach Anspruch 10, mit einer Vielzahl von Auflageelementen (2) gemäß einem der vorangegangenen Ansprüche 1 bis 9, sowie mit wenigstens einem Antriebselement zur Durchführung eines Bewegungsvorgangs der Hebebühne und einer Arbeitseinheit (50), wobei die Arbeitseinheit (50) eine Empfangseinrichtung (51) für die von den Sendeeinrichtungen (14) der Auflageelemente (2) drahtlos abgegebenen Signale aufweist,
**dadurch gekennzeichnet, dass**
die Arbeitseinheit (50) eine weitere Sendeeinrichtung (58) aufweist, welche Signale drahtlos an die Auflageelemente (2) ausgibt und die Auflageelemente (2) jeweils wenigstens eine weitere Empfangseinrichtung (19) aufweisen, welche die von der weiteren Sendeeinrichtung (58) ausgegebenen Signale aufnimmt.

12. Hebebühne nach Anspruch 11,
**dadurch gekennzeichnet, dass**
die Arbeitseinheit (50) eine Steuereinrichtung (59) aufweist, die bewirkt, dass die weitere Sendeeinrichtung (58) Bestätigungssignale in Reaktion auf die von den Sendeeinrichtungen (14) der Auflageelemente gesendeten Signale ausgibt.

13. Hebebühne nach wenigstens einem der vorangegangenen Ansprüche 11 - 12
**dadurch gekennzeichnet, dass**
die Auflageelemente (2) von der Hebebühne entfernbar sind.

14. Verfahren zum Betreiben einer Hebebühne gemäß einem der vorangegangenen Ansprüche 11 bis 13 mit den Schritten:
- Ermitteln einer Vielzahl von zwischen einem zu hebenden Fahrzeug und einem Trageelement der Hebebühne wirkenden Gewichtskräften mittels einer Vielzahl von in Auflageelementen (2) angeordneten Sensoreinrichtungen (4);
- drahtlose Übermittlung von für diese Gewichtskräften charakteristischen Werten durch eine Sendeeinrichtung (14) der Auflageelemente an eine Empfangseinrichtung (51) einer Arbeitseinheit (50) ;
**dadurch gekenzeichnet, dass**
die Arbeitseinheit (50) mittels einer weiteren Sendeeinrichtung (58) Signale drahtlos an die Auflageelemente (2) ausgibt und die Auflageelemente (2) mit jeweils wenigstens einer weiteren Empfangseinrichtung (19) die von der weiteren Sendeeinrichtung (58) ausgegebenen Signale aufnehmen.

## Claims

1. A support element (2) for lifting platforms, which is capable of being arranged between a carrying element (3) of the lifting platform and a vehicle to be lifted, wherein the support element (2) is capable of being removed from the carrying element (3), with a sensor device (4) for measuring a weight force acting between the vehicle and the carrying element (3), wherein the sensor device (4) emits a signal which is characteristic of this weight force, with a transmitting device (14) which emits this characteristic signal or a signal derived from this characteristic signal, **characterized in that** the support element has a main body (10) of a deformable material, in the interior of which is arranged the sensor device (4), a support face (12) on which an element of the vehicle to be lifted rests in the operating state, as well as a force transmission device (6) which is arranged inside the main body (10) and above the sensor device (4) and which is movable at least with respect to a portion of the main body (10) and which transmits a weight force exerted by the vehicle to the sensor device (4).

2. A support element (2) according to claim 1, **characterized in that** the force transmission device (6) consists of a different material from the main body (10).

3. A support element (2) according to at least one of the preceding claims, **characterized in that** the transmitting device (14) transmits or emits the signal wirelessly.

4. A support element (2) according to at least one of the preceding claims, **characterized in that** a further force transmission device (8) which is movable at least with respect to a portion of the main body (10) is arranged below the sensor device (4).

5. A support element (2) according to at least one of the preceding claims, **characterized in that** the main body (10) surrounds the sensor device (4) completely in the peripheral direction.

6. A support element (2) according to at least one of the preceding claims, **characterized in that** the main body (10) is arranged on a carrier plate (15).

7. A support element (2) according to at least one of the preceding claims, **characterized in that** the support face (12) projects out of the main body (10).

8. A support element (2) according to at least one of the preceding claims, **characterized in that** the support face (12) is smaller than an upwardly directed surface (11) of the support element (2).

9. A support element (2) according to at least one of the preceding claims, **characterized in that** the transmitting device (14) has a signal generation device which generates an identification signal by means of which the support element is capable of being clearly identified.

10. A measuring arrangement with a plurality of support elements (2) according to at least one of the preceding claims and a working unit (20), wherein the working unit has a receiving device for the signals emitted by the transmitting devices of the support elements.

11. A lifting platform with a measuring arrangement according to claim 10, with a plurality of support elements (2) according to any one of the preceding claims 1 to 9, and with at least one driving element for performing a movement procedure of the lifting platform and a working unit (50), wherein the working unit (50) has a receiving device (51) for the signals emitted wirelessly by the transmitting devices (14) of the support elements (2), **characterized in that** the working unit (50) has a further transmitting device (58) which emits signals wirelessly to the support elements (2), and the support elements (2) have in each case at least one further transmitting device (19) which receives the signals emitted by the further transmitting device (58).

12. A lifting platform according to claim 11, **characterized in that** the working unit (50) has a control device (59) which causes the further transmitting device (58) to emit confirmation signals in reaction to the signals sent by the transmitting devices (14) of the support elements.

13. A lifting platform according to at least one of the preceding claims 11 to 12, **characterized in that** the support elements (2) are capable of being removed from the lifting platform.

14. A method of operating a lifting platform according to any one of the preceding claims 11 to 13 with the steps:
- determining a plurality of weight forces - acting between a vehicle to be lifted and a carrying element of the lifting platform - by means of a plurality of sensor devices (4) arranged in support elements (2);
- wirelessly transmitting values characteristic of these weight forces by a transmitting device (14) of the support elements to a receiving device (51) of a working unit (50);
**characterized in that** the working unit (50) emits signals wirelessly to the support elements (2) by means of a further transmitting device (58), and the support elements (2) receive the signals - emitted by the further transmitting device (58) - with at least one further receiving device (19) in each case.

## Revendications

1. Elément d'appui (2) pour des plates-formes élévatrices, pouvant être disposé entre un élément de support (3) de la plate-forme élévatrice et un véhicule à lever, ledit élément d'appui (2) pouvant être retiré de l'élément de support (3), avec un dispositif de capteur (4) pour la mesure d'une force de poids s'exerçant entre le véhicule et l'élément de support (3), le dispositif de capteur (4) émettant un signal caractéristique pour ladite force de poids, avec un dispositif émetteur (14) émettant ledit signal caractéristique ou un signal dérivé dudit signal caractéristique,
**caractérisé en ce que**
ledit élément d'appui comporte un corps de base (10) d'un matériau déformable à l'intérieur duquel le dispositif de capteur (4) est disposé, une surface d'appui (12), sur laquelle repose, en état de fonctionnement, un élément du véhicule à lever, ainsi qu'un dispositif de transmission de force (6) disposé à l'intérieur du corps de base (10) et au-dessus du dispositif de capteur (4), lequel est déplaçable au moins par rapport à une partie du corps de base (10) et transmet au dispositif de capteur (4) une force de poids exercée par le véhicule.

2. Elément d'appui (2) selon la revendication 1, **caractérisé en ce que**
le dispositif de transmission de force (6) est dans un autre matériau que le corps de base (10).

3. Elément d'appui (2) selon au moins une des revendications précédentes, **caractérisé en ce que**
le dispositif émetteur (14) transmet ou respectivement délivre le signal par liaison radio.

4. Elément d'appui (2) selon au moins une des revendications précédentes, **caractérisé en ce qu'**
un autre dispositif de transmission de force (8) est disposé en dessous du dispositif de capteur (4), lequel est déplaçable au moins par rapport à une partie du corps de base (10).

5. Elément d'appui (2) selon au moins une des revendications précédentes, **caractérisé en ce que**
le corps de base (10) entoure complètement le dispositif de capteur (4) dans la direction périphérique.

6. Elément d'appui (2) selon au moins une des revendications précédentes, **caractérisé en ce que**
le corps de base (10) est disposé sur une plaque de support (15).

7. Elément d'appui (2) selon au moins une des revendications précédentes, **caractérisé en ce que**
la surface d'appui (12) dépasse du corps de base (10).

8. Elément d'appui (2) selon au moins une des revendications précédentes, **caractérisé en ce que**
la surface d'appui (12) est inférieure à une surface vers le haut (11) de l'élément d'appui (2).

9. Elément d'appui (2) selon au moins une des revendications précédentes, **caractérisé en ce que**
le dispositif émetteur (14) comporte un dispositif générateur de signal qui génère un signal d'identification au moyen duquel l'élément d'appui peut être identifié de manière univoque.

10. Dispositif de mesure avec une pluralité d'éléments d'appui (2) selon au moins une des revendications précédentes et une unité de travail (20), ladite unité de travail comportant un dispositif récepteur pour les signaux délivrés par les dispositifs émetteurs des éléments d'appui.

11. Plate-forme élévatrice avec un dispositif de mesure selon la revendication 10, avec une pluralité d'éléments d'appui (2) selon une des revendications 1 à 9, ainsi qu'avec au moins un élément d'entraînement pour l'exécution d'un processus de déplacement de la plate-forme élévatrice et une unité de travail (50), ladite unité de travail (50) comportant un dispositif récepteur (51) pour les signaux délivrés par liaison radio par les dispositifs émetteurs (14) des éléments d'appui (2), **caractérisée en ce que**
l'unité de travail (50) comporte un autre dispositif émetteur (58), lequel émet des signaux aux éléments d'appui (2) par liaison radio, et **en ce que** les éléments d'appui (2) comportent chacun au moins un autre dispositif récepteur (19), lequel reçoit les signaux émis par l'autre dispositif émetteur (58).

12. Plate-forme élévatrice selon la revendication 11, **caractérisée en ce que**
l'unité de travail (50) comporte un dispositif de commande (59) qui provoque l'émission par l'autre dispositif émetteur (58) de signaux d'activation en réponse aux signaux adressés par les dispositifs émetteurs (14) des éléments d'appui.

13. Plate-forme élévatrice selon au moins une des revendications 11 et 12, **caractérisée en ce que**
les éléments d'appui (2) sont amovibles de la plate-forme élévatrice.

14. Procédé de fonctionnement d'une plate-forme élévatrice selon une des revendications 11 à 13, comprenant les étapes suivantes :
- détermination d'une pluralité de forces de poids s'exerçant entre un véhicule à lever et un élément de support de la plate-forme élévatrice au moyen d'une pluralité de dispositifs de capteur (4) disposés dans des éléments d'appui (2) ;
- transmission par liaison radio de valeurs caractéristiques pour lesdites forces de poids, d'un dispositif émetteur (14) des éléments d'appui à un dispositif récepteur (51) d'une unité de travail (50) ;
**caractérisé en ce que**
l'unité de travail (50) délivre des signaux aux éléments d'appui (2) par liaison radio au moyen d'un autre dispositif émetteur (58) signaux, et **en ce que** les éléments d'appui (2) reçoivent les signaux émis par l'autre dispositif émetteur (58) avec chacun au moins un autre dispositif récepteur (19).
